# EUROPEAN PATENT APPLICATION

(11) **EP 4 632 913 A1**
(43) Date of publication of application: **15.10.2025**
(21) Application number: 23907473.5
(22) Date of filing: 27.11.2023
(51) Int. Cl.: H01M 50/317, H01M 50/342, H01M 50/119, H01M 50/121, H01M 50/15, H01M 50/557, H01M 50/548, H01M 50/186, H01M 50/103

(54) **SECONDARY BATTERY**

(30) Priority: 23.12.2022 KR 20220183715; 31.08.2023 KR 20230115741
(71) Applicant: LG Energy Solution, Ltd., Seoul 07335 (KR)
(72) Inventor: YUN, Hyun Woong, Daejeon 34122 (KR)
(74) Representative: Hoffmann Eitle
(86) International application number: PCT/KR2023/019247
(87) International publication number: WO 2024/136187

(57) **Abstract**

The present invention relates to a secondary battery and, more specifically, provides a secondary battery comprising: an electrode assembly which comprises a cathode, an anode, and a separator stacked together; a first case in which the electrode assembly is accommodated and which is broken if the internal pressure thereof is a predetermined pressure or greater; and a second case which has an inner space with a negative pressure formed therein, accommodates the first case in the inner space, and captures gas discharged from the first case.

## Description

### TECHNICAL FIELD

### CROSS-REFERENCE TO RELATED APPLICATION

The present application claims the benefit of the priority of Korean Patent Application Nos. 10-2022-0183715, filed on December 23, 2022, and 10-2023-0115741, filed on August 31, 2023, which are hereby incorporated by reference in their entirety.

### TECHNICAL FIELD

The present invention relates to a secondary battery, and more particularly, to a secondary battery that is capable of collecting a gas to adjust an internal pressure.

### BACKGROUND ART

Currently commercialized secondary batteries include nickel cadmium batteries, nickel hydride batteries, nickel zinc batteries, and lithium secondary batteries. Among them, when compared to nickel-based secondary batteries, the lithium secondary batteries are attracting attention because of their advantages such as freedom of charging and discharging, very low self-discharge rate, and high energy density due to almost no memory effect. Recently, secondary batteries have been widely used not only in small devices such as portable electronic devices, but also in medium-to-large devices such as vehicles and power storage devices. For these battery packs, a large number of secondary batteries may be electrically connected to each other to increase in capacity and output. Here, pouch-type secondary batteries are becoming more widely used due to their advantages such as easy stacking and light weight. The pouch-type secondary batteries may be generally manufactured through a process in which an electrolyte is injected while an electrode assembly is accommodated in a pouch exterior, and the pouch exterior is sealed. A gas may be generated inside a secondary battery as charging and discharging are repeated.

Here, there is a problem that the generated gas increases in internal pressure of the secondary battery and expands the battery case, and in severe cases, a hole is generated in the battery case due to the increasing internal pressure to cause rapid deterioration of the secondary battery.

### DISCLOSURE OF THE INVENTION

### TECHNICAL PROBLEM

The present invention is intended to solve the above problem and provides a secondary battery in which, when an internal pressure of the secondary battery increases to a predetermined level or more due to a gas generated in an electrode assembly, the gas inside the secondary battery is collected to adjust the internal pressure.

### TECHNICAL SOLUTION

According to a first embodiment of the present invention, the present invention provides a secondary battery including: an electrode assembly in which a positive electrode, a negative electrode, and a separator are stacked; a first case configured to accommodate the electrode assembly and damaged when an internal pressure thereof increases to a predetermined pressure or more; and a second case configured to accommodate the first case in an inner space having a negative pressure and collect a gas discharged from the first case.

In addition, the second case may have a collection space, in which the gas is collected between an inner surface of the second case and an outer surface of the first case, in the second case.

In addition, a cutoff line along which damage is induced may be defined on the first case.

In addition, the second case may be made of a metal or plastic material to support an external shape thereof.

In addition, the secondary battery may further include a first electrode lead protruding from one surface of the first case and electrically connected to the electrode assembly, wherein the first electrode lead may pass through one surface of the second case.

In addition, a lead film may be attached to an area, on which the first electrode lead passes through the second case, to seal the second case.

In addition, the lead film may be thermally fused to seal the second case.

In addition, an exhaust hole through which the gas in the internal space is exhausted may be defined in the second case.

In addition, an opening/closing unit configured to open and close the exhaust hole may be provided in the second case.

In addition, the second case may further include a position fixing unit configured to fix a position of the first case.

According to a second embodiment of the present invention, a secondary battery module includes: a plurality of secondary batteries; and a module case configured to accommodate the plurality of secondary batteries, wherein each of the secondary batteries includes: an electrode assembly in which a positive electrode, a negative electrode, and a separator are stacked; a first case configured to accommodate the electrode assembly; and a second case in which a negative pressure is generated in an inner space thereof and which accommodates the first case, wherein the second case is configured to collect a gas discharged from the first case.

### ADVANTAGEOUS EFFECTS

According to the present invention, when the internal pressure of the secondary battery increases to a predetermined level or more due to the gas generated in the electrode assembly, the gas may be collected in the secondary battery to delay the increase of the internal pressure, thereby improving the lifespan of the secondary battery.

### BRIEF DESCRIPTION OF THE DRAWINGS

FIG. 1 is a perspective view illustrating an outer appearance of a secondary battery according to a first embodiment of the present invention.
FIG. 2 is an exploded view illustrating a state in which a cover frame and an accommodation frame are separated from each other to show the inside of a second case according to the first embodiment of the present invention.
FIG. 3 is an exploded view of an electrode assembly accommodated in a first case according to the first embodiment of the present invention.
FIG. 4 is a cross-sectional view of the first case of FIG. 2, which is taken along line AA', according to the first embodiment of the present invention.
FIG. 5 is a cross-sectional view illustrating a state in which a movable part closes a discharge hole in a discharge unit of the present invention.
FIG. 6 is a cross-sectional view illustrating a state in which the movable part opens the discharge hole in the discharge unit of the present invention. FIG. 7 is an enlarged view of a portion 'A' of FIG. 1, i.e., is a perspective view illustrating a process of opening the discharge hole by an opening/closing unit.
FIG. 8 is a plan view illustrating a configuration of the accommodation frame according to the first embodiment of the present invention.
FIG. 9 is a view illustrating a configuration in which a plurality of first cases are accommodated in a second case.

### MODE FOR CARRYING OUT THE INVENTION

Hereinafter, it will be described about an exemplary embodiment of the present invention in conjunction with the accompanying drawings. However, the following drawings are intended to facilitate the understanding of the present invention and are only one embodiment of the present invention, and the scope of the present invention is not limited to the range described in the drawings. In addition, in the following drawings, the same symbols refer to the same components, and some components may be exaggerated, miniatured, or omitted for easier understanding of the invention.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### First embodiment

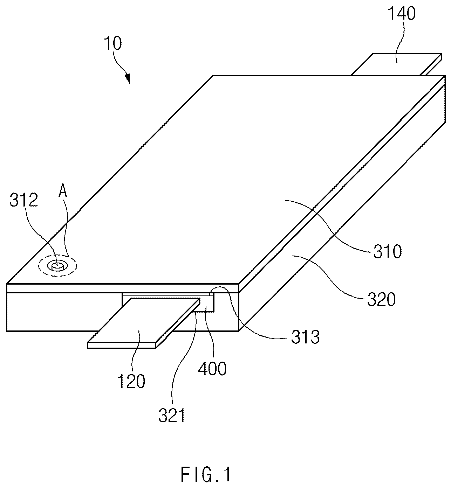

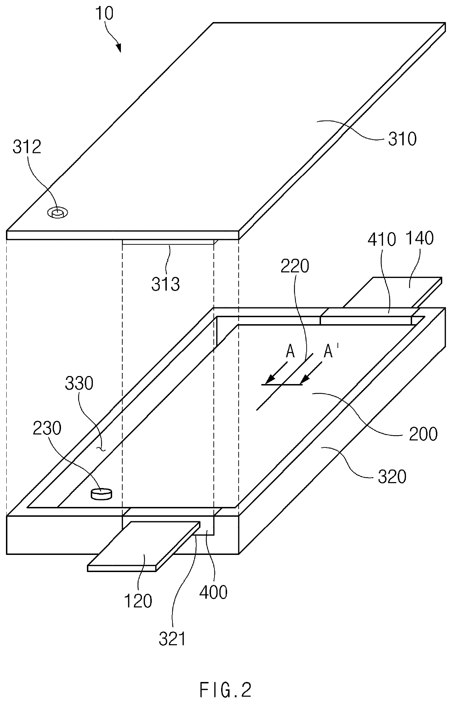

Referring to FIGS. 1 and 2, a secondary battery 10 according to a first embodiment of the present invention may include an electrode assembly 100, a first case 200, and a second case 300.

The electrode assembly 100 may have a structure in which positive electrode current collector/positive electrode active material layer/separator/negative electrode active material layer/negative electrode current collector are sequentially stacked. The positive electrode current collector may include an area coated with the positive electrode active material layer and a positive electrode non-coating portion area that is not coated with the positive electrode active material, and the positive electrode non-coating portion area may be a positive electrode tab. The negative electrode current collector may include an area coated with a negative electrode active material layer and a negative electrode non-coating portion area that is not coated with the negative electrode active material, and the negative electrode non-coating portion area may be a negative electrode tab. The separator may include an electrically insulating material and may be disposed between the positive electrode current collector and the negative electrode current collector to prevent the current collectors having different polarities from being in contact with each other.

The electrode assembly 100 may be a stack type electrode assembly, a stack-folding type electrode assembly, or a jelly-roll type electrode assembly.

The first electrode tab 110 may be either a positive electrode non-coating portion or a negative electrode non-coating portion of the electrode assembly 100, and the first electrode tab 110 may protrude to extend in one direction from one surface of the electrode assembly 100.

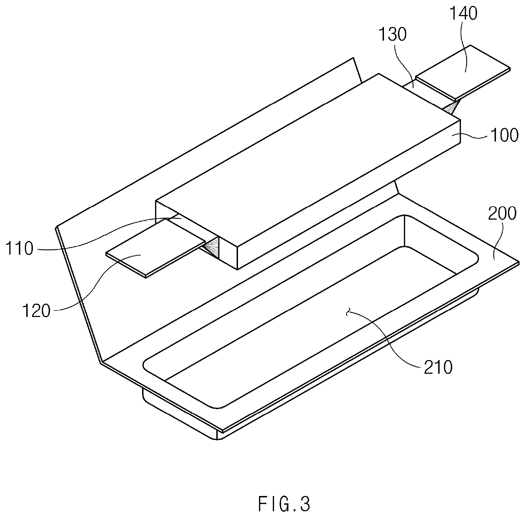

When described with reference to FIG. 3, since the first electrode tab 110 protrudes from each of the positive electrode non-coating portion or the negative electrode non-coating portion of the electrode assembly 100 in one direction, the first electrode tab 110 may be provided in plurality.

The plurality of first electrode tabs 110 may be bonded to one surface or both surfaces of a first electrode lead 120, and at least a portion of the first electrode lead 120 may protrude from one surface of the first case 200. The first electrode tab 110 may be bonded to the first electrode lead 120 by welding.

The second electrode tab 130 may be a non-coating portion having a polarity that is opposite to that of the first electrode tab 110 in either the positive electrode non-coating portion or the negative electrode non-coating portion. The second electrode tab 130 may protrude to extend from the electrode assembly 100 in the other direction.

Since the first electrode tab 130 protrudes from each of the positive electrode non-coating portion or the negative electrode non-coating portion of the electrode assembly 100 in the other direction, the first electrode tab 110 may be provided in plurality.

The plurality of second electrode tabs 130 may be bonded to one surface or both surfaces of a second electrode lead 140, and at least a portion of the first electrode lead 140 may protrude from the other surface of the first case 200. The second electrode tab 130 may be bonded to the second electrode lead 140 by welding.

The first electrode lead 120 and the second electrode lead 140 may protrude in opposite directions.

The first case 200 may include a first resin layer disposed on a stacked structure of an outer surface thereof, a second resin layer disposed on an inner space thereof, and a metal layer disposed between the first resin layer and the second resin layer.

In the resin layer, since an insulating layer made of a polymer material has to have excellent resistance to external environments to protect the battery against the outside, the insulating layer requires excellent tensile strength and weather resistance with respect to a thickness thereof. For example, the insulating layer may made of a polyester-based resin such as polyethylene terephthalate (PET) and polyethylene naphthalate (PEN), a polyolefin-based resin such as polyethylene and polypropylene, a polystyrene-based resin such as polystyrene, a polyvinyl chloride-based resin, and a polychloride vinylidene-based resin, etc. The material may be used alone or in combination of two or more materials, and polyethylene terephthalate, polyethylene naphthalate, etc. may be preferably used.

The metal layer may serve as a base material that maintains mechanical strength and a barrier layer that prevents moisture and oxygen from being penetrated. Aluminum or an aluminum alloy may be used to exhibit a function of improving strength of the battery case in addition to a function of preventing gases, moisture, and the like from being introduced or discharged, and examples of the aluminum alloy may include alloy numbers 8079, 1N30, 8021, 3003, 3004, 3005, 3104, and 3105, which may be used alone or in combination of two or more. Among the aluminum alloys, alloy numbers 8079, 1N30, 8021 and 3004 may be particularly preferably used as the barrier layer.

In the second resin layer, an area that is thermally fused may form a sealing part on an edge area of the first case 200, and an area that is not thermally fused may form an inner space of the first case 200. The second resin layer may be made of a polyolefin-based resin material. Casted polypropylene that is generally used may be used for the polyolepin-based resin layer. In addition, the second resin layer may be made of a material selected from the group consisting of a polyolefin-based resin such as chlorinated polypropylene, polyethylene, an ethylene propylene copolymer, a polyethylene and acrylic acid copolymer, and a polypropylene and acrylic acid copolymer, but not limited to the above-described materials.

An accommodation part 210 provided in a concave shape may be provided in the first case 200 to accommodate the electrode assembly 100. The accommodation part 210 may be provided to have a predetermined width and depth to accommodate the electrode assembly 100.

The first case 200 may be damaged when the internal pressure increases to a predetermined pressure or more due to the gas generated as the electrode assembly 100 is continuously and repeatedly charged and discharged.

A cutoff line 220 may be defined on the first case 200 to induce damage when the internal pressure of the first case 200 increases to a predetermined pressure or more.

The cutoff line 220 may be disposed on an outer or inner space of the first case 200 and may be provided in plurality. The plurality of cutoff lines 220 may be arranged according to a predetermined arrangement.

When the internal pressure of the first case 200 increases due to the gas generated from the electrode assembly 100, the cutoff line 220 may induce damage of the outer surface of the first case 200 along the cutoff line 220 by the pressure applied to the cutoff line 220. If the outer surface of the first case 200 is damaged along the cutoff line 220, the gas discharged from the first case 200 may be collected in an inner space of the second case 300 that accommodates the first case 200.

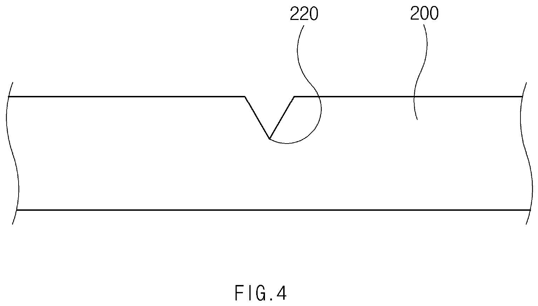

Referring to FIG. 4, a cross-sectional shape of the cutoff line 220 may be provided in a notch shape, and directions of inclination at both sides around the vertex may be opposite to each other and be provided in a straight line so that the stress is concentrated at the vertex of the central portion of the notch shape. In the cross-sectional shape of the cutoff line 220, even though a pressure is uniformly applied to the inner space of the first case 200, on which the cutoff line 220 is defined, the cutoff line 220 may be induced to be damaged first. Thus, predictability of the internal pressure that is changed as the secondary battery 10 is repeatedly charged and discharged may be improved. In addition, even if the secondary battery 10 is continuously and repeatedly charged and discharged, the change in internal pressure of the secondary battery 10 may be mitigated to reduce possibility of the secondary battery 10, thereby improving a lifespan of the secondary battery 10.

Although not limited thereto, the cutoff line 220 may be provided, for example, in a linear or curved shape, or in the form of a shape such as a circle or square.

The position at which the cutoff line 220 is defined may not be limited thereto, but may be disposed at a position adjacent to a collection space 330 of the second case 300.

The first case 200 may further include a discharge unit 230 and a discharge hole 221.

The discharge hole 221 may be a hole defined in one surface of the first case 200 to pass through the first case 200.

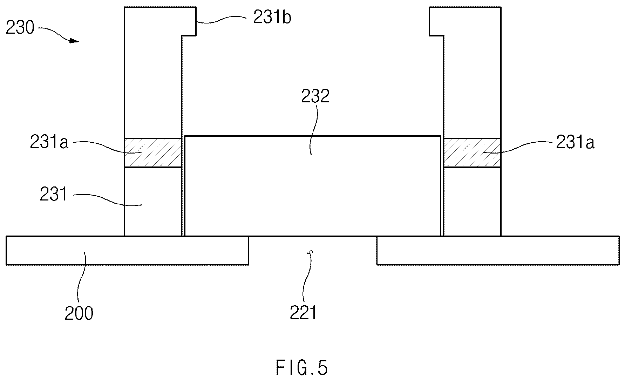

Referring to FIG. 5, the discharge unit 230 is coupled to the discharge hole 221, and the discharge unit 230 may open or close the discharge hole 221 according to a difference between an internal pressure of the first case 200 and an internal pressure of the second case 300.

The discharge unit 230 may include a support 231 and a movable part 232.

The support 231 may be coupled to one surface of the first case 200 along an edge of the discharge hole 221 defined in the first case 200.

The support 231 may be provided to protrude outward from one surface of the first case 200, and may have a hollow passing through a center so as to allow the inside of the first case 200 and the inside of the second case 300 to communicate with each other.

The movable part 232 may be disposed in the hollow passing through the center of the support 231.

Since the movable part 232 is disposed so that one side thereof faces the discharge hole 221, and the other side thereof faces the inner space of the second case 300, the one side of the movable part 232 may be pressed by an internal pressure of the first case 200 through the discharge hole 221, and the other surface of the movable part 232 may be pressed by an internal pressure of the second case 300. Thus, the movable part 232 may move along the hollow of the support 231 in a longitudinal direction of the support 231 according to the difference between the internal pressure of the first case 200 and the internal pressure of the second case 300.

A connection hole 231a passing through the side of the support 231 may be defined in a side surface of the support 231. The connection hole 231a may be opened or closed according to a position at which the movable part 232 is disposed in the hollow of the support 231.

For example, when the internal pressure of the first case 200 is less than the internal pressure of the second case 300, the movable part 232 may be disposed to be in close contact with the discharge hole 221 according to the pressure difference applied to the one side and the other side, and thus, one surface of the movable part 232 may close the discharge hole 221. Here, the side surface of the movable part 232 may be in close contact with the connection hole 231a defined in the inner space of the support 231 to close the connection hole 231a.

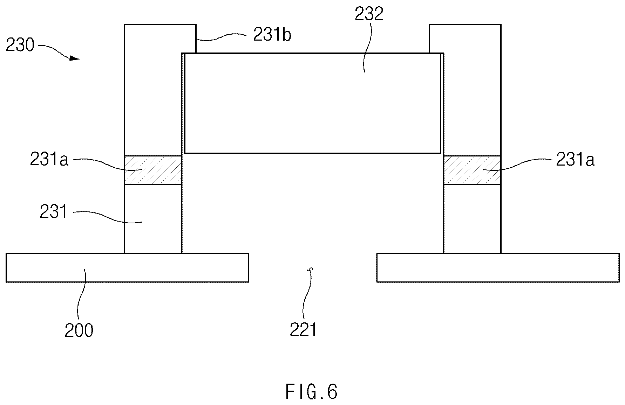

Referring to FIG. 6, when the internal pressure of the first case 200 is greater than the internal pressure of the second case 300, the movable part 232 may move in a direction away from the discharge hole 221 due to the pressure difference applied to the one surface and the other surface in the hollow of the support 231. Here, the movable part 232 may open the discharge hole 221 and the connection hole 231a, and the gas inside the first case 200 may be discharged into the inner space of the second case 300 through the discharge hole 221 and the connection hole 231a.

A hook protrusion 231b protruding from an inner surface to limit a movement range of the movable part 232 may be disposed on an inner end of the support 231.

The second case 300 may have a hollow defined in the inner space, the hollow defined in the inner space may have a negative pressure, and the first case 200 may be accommodated in the inner space. Here, the negative pressure may mean a state in which a pressure of the hollow defined in the inner space of the second case 300 is less than an external pressure of the second case 300.

Since the inner space of the second case 300 has the negative pressure, the pressure may be less than the internal pressure of the first case 200, and a hole may be defined in the first case 200 to allow the inner space of the first case 200 and the inner surface of the second case 300 to communicate with each other, the gas generated in the inner space of the first case 200 may be introduced into the inner space of the second case 300 due to the pressure difference.

In the second case 300, a collection space 330 may be defined in a space between an inner space of the second case 300 and an outer surface of the first case 200. The gas discharged from the first case 200 may be collected into the collection space 330.

The second case 300 may be made of a hard metal or plastic material to support the external shape. The collection unit 300 may be made of a plastic material such as polyethylene (PE), polypropylene (PP), polystyrene (PS), polyethylene terephthalate (PET), polyamides (PA), polyester (PES), polyvinyl chloride (PVC), polyurethanes (PU), polycarbonate (PC), and polyvinylidene chloride (PVDC), a metal such as aluminum, copper, lead, zinc, tin, iron, stainless steel, tungsten, chromium, and nickel, or an alloy material of the above-described two or more materials. Thus, the second case 300 may be maintained in its shape without being deformed even if the internal pressure increases due to the gas discharged from the first case 200.

Since the widest outer surface of the second case 300 is flat and has a smooth shape, the plurality of second cases 300 may be effectively stacked.

The second case 300 may include a cover frame 310 and an accommodation frame 320.

The accommodation frame 320 may have one side opened so that the first case 200 is accommodated and may communicate with the inner space in which the first case 200 is accommodated through the opened surface.

The shape of the accommodation frame 320 is not limited thereto, but may be provided in, for example, a hexahedron or a cylinder.

The accommodation frame 320 may be provided in a structure in which all surfaces except the opened one surface are closed.

A coupling groove 321 into which the first electrode lead 120 is coupled may be defined in the accommodation frame 320.

The coupling groove 321 may be defined in a recessed shape with a predetermined depth and width in an edge area facing the cover frame 310. The coupling groove 321 may be provided in plurality, and the plurality of coupling grooves 321 may be defined in one edge and the other edge of the accommodation frame 320.

The coupling groove 321 may be defined in a central edge area or an area biased in one direction along the edge according to a position at which the first case 200 is disposed inside the second case 300.

The cover frame 310 may be coupled to the opened one surface of the accommodation frame 320 to seal the second case 300.

The cover frame 310 may be provided so that a pressing unit 313 protrudes from a surface facing the accommodation frame 320. The pressing unit 313 may be disposed at a position corresponding to the coupling groove 321. The pressing unit 313 may be inserted into the coupling groove 321 when the cover frame 310 and the accommodation frame 320 are coupled to each other.

A protruding height of the pressing unit 313 may be less than a depth of the coupling groove 321.

The first electrode lead 120 may pass through one side of the second case 300, and the second electrode lead 140 may pass through the other side of the second case 300. Here, the first electrode lead 120 and the second electrode lead 140 may be seated in the coupling grooves 321 defined in one edge and the other edge of the accommodation frame 320, respectively.

Lead films 400 and 410 may be attached to an area in which the first electrode lead 120 passes through the second case 300 to seal the second case 300. The first electrode lead 120 and the second electrode lead 140 may be seated in the coupling groove 321 to pass through the second case 300, and the gas may be introduced into the second case 300 from the outside through a gap defined between the coupling groove 321 and the first electrode lead 120 or between the coupling groove 321 and the second electrode lead 140.

Each of the lead film may include an electrical insulating material, but is not limited thereto, and may be, for example, a material such as polypropylene or polyethylene.

The lead films 400 and 410 may surround the first electrode lead 120 and the second electrode lead 140 and be attached to the coupling groove 321. The lead films 400 and 410 may include a first lead film 400 and a second lead film 410. Here, the first lead film 400 may be a film that surrounds the first electrode lead 120 and has a coupling groove 321, and the second lead film 410 may be a film that surrounds the second electrode lead 140 and is attached to the coupling groove 321.

The lead films 400 and 410 may be melted by heat, and the melted lead films 400 and 410 may be in close contact with the coupling groove 321 and the first electrode lead 120 or with the coupling groove 321 and the second electrode lead 140 by the pressure. In this state, the melted lead films 400 and 410 may be cooled to seal the second case 300.

The pressing unit 313 disposed on the cover frame 310 may be disposed at a position corresponding to the coupling groove 321 to protrude toward the coupling groove 321, and thus, when the cover frame 310 and the accommodation frame 320 are coupled to each other, the melted lead films 400 and 410 may be pressed. The lead films 400 and 410 pressed by the pressing unit 313 may be in close contact with the first electrode lead 120 or the coupling groove 321 and the second electrode lead 140, and in this state, the melted lead films 400 and 410 may be cooled to seal the second case 300.

An exhaust hole 311 that exhaust a gas in the inner space may be defined in the second case 300. More specifically, an exhaust hole 311 may be defined in the cover frame 310 to discharge a gas inside the second case 300.

A hole unit 311a defining the exhaust hole 311 may be provided in the second case 300. A threaded surface may be disposed on an outer surface of the hole unit 311a to protrude.

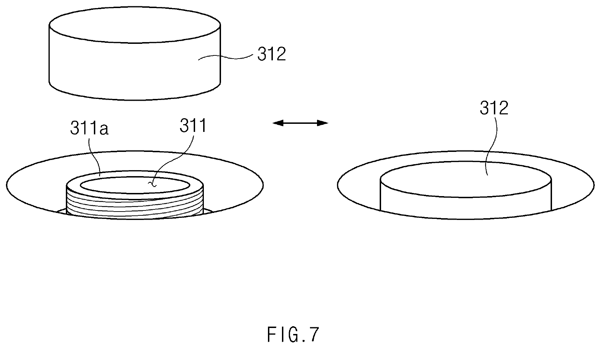

When described with reference to FIG. 7, the cover frame 310 may further include an opening/closing unit 312 capable of opening and closing the exhaust hole 311. The opening/closing unit 312 may be coupled to and separated from the hole unit 311a. When the opening/closing unit 312 is coupled to the hole unit 311a, the exhaust hole 311 may be closed, and thus, the gas may not flow into or out of the second case 300 through the exhaust hole 311. When the opening/closing unit 312 is separated from the hole unit 311a, the exhaust hole 311 may be opened, and thus, the gas may flow into or out of the second case 300 through the exhaust hole 311.

A threaded surface corresponding to the threaded surface of the hole unit 311a may be disposed on an inner surface of the opening/closing unit 312, and the opening/closing unit 312 and the hole unit 311a may be screw-coupled to each other.

When the opening/closing unit 312 is completely coupled to the hole unit 311a, the opening/closing unit 312 may be provided so as not to protrude beyond the outermost surface of the cover frame 310. When the secondary batteries 10 are stacked, if the opening/closing unit 312 protrudes beyond the outermost surface of the cover frame 310, it is difficult to stack the secondary batteries 10, and a volume unnecessarily increases. Thus, even if the opening/closing unit 312 is completely coupled to the hole unit 311a, the opening/closing unit 312 may be provided so as not to protrude beyond the outermost surface of the cover frame 310.

As a first implementation example of a method for forming the inner space of the second case 300 into a negative pressure state, the method may include a first case sealing process and a second case sealing process. The first case sealing process may include a process of forming a negative pressure by discharging a gas inside the first case 200 and a process of sealing the first case 200 with the negative pressure formed inside the first case 200. When only the inside of the second case 300 is formed with the negative pressure, the first case 200 may be expanded due to the difference between the internal pressure of the first case 200 and the internal pressure of the second case 300, and thus, the first case 200 may be damaged. Thus, the internal pressure of the first case 200 may be formed into the negative pressure through the first case sealing process. The second case sealing process may be a process of accommodating and sealing the first case 200 in which the electrode assembly is accommodated in the second case 300 and may further include a process of discharging the inner gas from the sealed second case 300 to form the inside of the second case 300 with the negative pressure. During the process of forming the inside of the second case 300 with the negative pressure, the internal pressure of the second case 300 may be reduced, and thus, the first case 200 disposed inside the second case 300 may be expanded as the internal pressure of the second case 300 decreases. However, in order to minimize the expansion of the first case 200, the pressure inside the second case 300 and the pressure inside the first case 200 may be set to the same or similar pressure. For example, the first case sealing process may be performed at a pressure of 0.04 Mpa to seal the first case, and then the second case sealing process may also be performed at a pressure of 0.04 Mpa.

As a second implementation example of a method for forming the inside space of the second case 300 into a negative pressure state, in the process of forming the inside of the second case 300 into the negative pressure state, when exhausting the gas inside the second case 300 through the exhaust hole 311 by a suction device (not shown), since the internal pressure of the second case is reduced, a difference between the internal pressure of the first case 200 and the internal pressure of the second case 300 may occur. Here, as the first case 200 is expanded, the first case 200 may be damaged. Thus, the discharge unit 230 may be further provided in the first case 200 to prevent the first case 200 from being damaged, and when the gas inside the second case 300 is suctioned through the exhaust hole 311 to generate the negative pressure inside the second case 300, the gas inside the first case 200 may be discharged through the discharge unit 230 to prevent the first case 200 from being expanded and damaged.

A position fixing unit 322 may be provided on the accommodation frame 320.

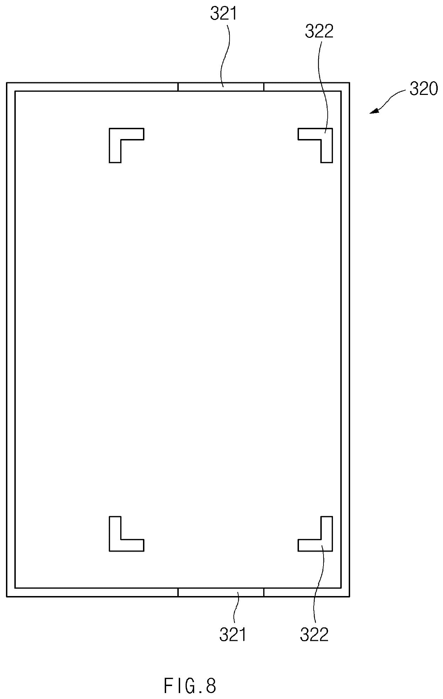

Referring to FIG. 8, the position fixing unit 322 may be a configuration that is provided on an inner bottom surface of the accommodation frame 320 and is used to fix a position of the first case 200 seated inside the accommodation frame 320.

The position fixing unit 322 may be disposed to protrude upward from the inner bottom surface of the accommodation frame 320 and be disposed at a position corresponding to each vertex of the bottom surface of the first case 200 facing the inner bottom surface of the accommodation frame 320.

Each vertex of the bottom surface of the first case 200 may be fitted into the position fixing unit 322, and the first case 200 may be fixed in position so as not to move in a direction parallel to the inner bottom surface of the accommodation frame 320.

The position fixing unit 322 may be provided to have a bent shape, and the first case 200 may be disposed so that the vertex of the first case 200 is disposed on a bent inner area of the position fixing unit 322.

The position fixing unit 322 may be provided in plurality, and the plurality of position fixing units 322 may be disposed at positions corresponding to four vertexes of the bottom surface of the first case 200. Since each of the four vertexes of the first case 200 is fixed in position by the position fixing unit 322, the first case 200 may be stably fixed in position so as not to move in the direction parallel to the inner bottom surface of the accommodation frame 320.

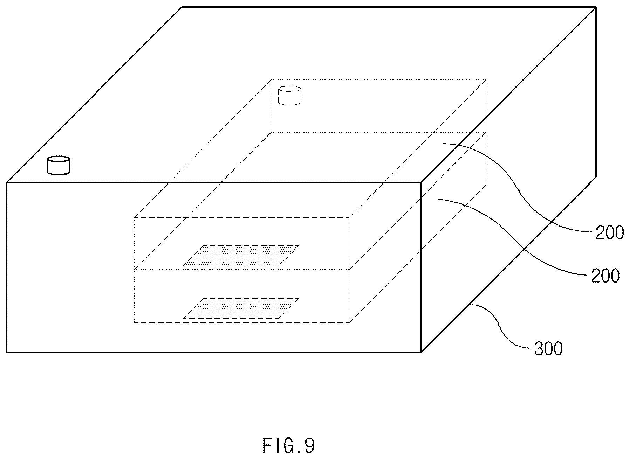

Referring to FIG. 9, a secondary battery may be manufactured in a manner that a plurality of first cases 200 are accommodated in the second case 300. In this case, battery capacity may be realized larger.

In addition, the second case 300 may function as a type of battery module. That is, the first case 200, which accommodates the electrode assembly, in which the positive electrode, the negative electrode, and the separator are stacked, and is damaged when an internal pressure increases to a predetermined pressure or more, may be like a secondary battery. The plurality of first cases 200 may be accommodated inside the second case 300, and the first cases 200 may be electrically connected to each other. In addition, as described above, the first cases 200 may be electrically connected to each other and managed and accommodated in the second case 300. In this case, the second case 300 accommodating the plurality of first cases 200 therein may become one battery module as a whole.

In this case as well, the second case 300 may be configured to accommodate the first case 200 in the inner space having the negative pressure to collect the gas discharged from the first case 200.

### Second embodiment

According to a second embodiment of the present invention, a secondary battery module (not shown) of the present invention may include a plurality of secondary batteries 10 and a module case (not shown) that accommodates the plurality of secondary batteries 10. The plurality of secondary batteries 10 may include an electrode assembly 100 in which a positive electrode, a negative electrode, and a separator are stacked, a first case 200 accommodating the electrode assembly 100, and a second case 300 in which a negative electrode is generated in an inner space thereof and which accommodates the first case 200. Detailed descriptions of the electrode assembly 100, the first case 200, and the second case 300 may be replaced by the above-described contents.

Although the present technology has been described through the above examples, the present technology is not limited thereto. The above embodiments may be modified or changed without departing from the spirit and scope of the present technology, and those skilled in the art will recognize that such modifications and changes also belong to the present technology.

### [Description of the Symbols]

10: Secondary battery
100 : Electrode assembly
110: First electrode tab
120 : First electrode lead
130 : Second electrode tab
140 : Second electrode lead
200: First case
210: Accommodation part
220: Cutoff line
300: Second case
310: Cover frame
311: Exhaust hole
311a : Hole unit
312 : Opening/closing unit
313 : Pressing unit
320: Accommodation frame
321: Coupling groove
322 : Position fixing unit
330: Collection space
400: First lead film
410: Second lead film

## Claims

1. A secondary battery comprising:
an electrode assembly in which a positive electrode, a negative electrode, and a separator are stacked;
a first case configured to accommodate the electrode assembly and damaged when an internal pressure thereof increases to a predetermined pressure or more; and
a second case configured to accommodate the first case in an inner space having a negative pressure and collect a gas discharged from the first case.

2. The secondary battery of claim 1, wherein the second case has a collection space, in which the gas is collected between an inner surface of the second case and an outer surface of the first case, in the second case.

3. The secondary battery of claim 1, wherein a cutoff line along which damage is induced is defined on the first case.

4. The secondary battery of claim 1, wherein the second case is made of a metal or plastic material to support an external shape thereof.

5. The secondary battery of claim 1, further comprising a first electrode lead protruding from one surface of the first case and electrically connected to the electrode assembly,
wherein the first electrode lead passes through one surface of the second case.

6. The secondary battery of claim 5, wherein a lead film is attached to an area, on which the first electrode lead passes through the second case, to seal the second case.

7. The secondary battery of claim 6, wherein the lead film is thermally fused to seal the second case.

8. The secondary battery of claim 1, wherein an exhaust hole through which the gas in the internal space is exhausted is defined in the second case.

9. The secondary battery of claim 8, wherein an opening/closing unit configured to open and close the exhaust hole is provided in the second case.

10. The secondary battery of claim 1, wherein the second case further comprises a position fixing unit configured to fix a position of the first case.

11. The secondary battery of claim 1, wherein the first case comprises a discharge hole and a discharge unit,
wherein the discharge hole is defined in one surface of the first case to pass through the first case, and
the discharge unit is coupled to the discharge hole to open or close the discharge hole according to a difference between an internal pressure of the first case and an internal pressure of the second case.

12. The secondary battery of claim 11, wherein the discharge unit comprises a support and a movable part,
wherein the support is coupled to the discharge hole and having a hollow that passes through a center of the support, and
the movable part is disposed in the hollow of the support and provided to move due to the pressure difference so as to open or close the discharge hole.

13. The secondary battery of claim 1, wherein a plurality of first cases are accommodated in the second case.

14. A battery module comprising:
an electrode assembly in which a positive electrode, a negative electrode, and a separator are stacked;
a first case configured to accommodate the electrode assembly and damaged when an internal pressure thereof increases to a predetermined pressure or more; and
a second case configured to accommodate the first case in an inner space having a negative pressure and collect a gas discharged from the first case,
wherein a plurality of first cases are accommodated in the second case.

15. A secondary battery module comprising:
a plurality of secondary batteries; and
a module case configured to accommodate the plurality of secondary batteries,
wherein each of the secondary batteries comprises:
an electrode assembly in which a positive electrode, a negative electrode, and a separator are stacked;
a first case configured to accommodate the electrode assembly; and
a second case in which a negative pressure is generated in an inner space thereof and which accommodates the first case,
wherein the second case is configured to collect a gas discharged from the first case.
